# EUROPEAN PATENT APPLICATION

(11) **EP 4 223 488 A1**
(43) Date of publication of application: **09.08.2023**
(21) Application number: 22155589.9
(22) Date of filing: 08.02.2022
(51) Int. Cl.: B29C 70/00

(54) **FIBER-REINFORCED COMPOSITE MATERIAL CONTAINING PHOTODEGRADED POLYOLEFIN AS BONDING AGENT**

(71) Applicant: Universität Hamburg, 20148 Hamburg (DE)
(72) Inventor: De Angelis, Marco, 20537 Hamburg (DE); Schmidt, Goran, 22297 Hamburg (DE); Krause, Andreas, 21033 Lohbrügge (DE)
(74) Representative: Stüven, Ralf

(57) **Abstract**

The invention relates to a fiber-reinforced composite material comprising reinforcing fibers embedded in a thermoplastic matrix, wherein the composite material comprises a bonding agent for bonding the reinforcing fibers to the thermoplastic matrix, the bonding agent being or comprising a photodegraded polyolefin.

## Description

The invention relates to a fiber-reinforced composite material containing photodegraded polyolefin as bonding agent, a method of preparing the composite material, the use of a photodegraded polyolefin as a bonding agent, and an article of manufacture comprising the fiber-reinforce composite materials.

In fiber-reinforced composite materials, for example fiberglass, carbon-fibre-reinforced polymers, lignocellulose-plastic composite materials (LPC) or wood-plastic composites (WPC), a reinforcing component is embedded as a filler or fiber in a thermoplastic matrix. The matrix is reinforced by, for example, glass fibers, carbon fibers, aramid fibers, graphite fibers, or lignocellulose-based materials such as wood particles, hemp fibers, flax fibers, fabrics or veneers. The reinforcing component has to be bonded to the thermoplastic matrix, e.g. made of polyolefins such as polyethylene. However, due to the often polar and heterogeneous topochemical properties, the reinforcing components like, for example, lignocelluloses bond only inadequately with the non-polar thermoplastic matrix. This leads to unsatisfactory mechanical and physical properties of the composite material. To counteract this, appropriate additives or surface treatments must be used to promote adhesion of both components.

While there is a continuously growing need for composite materials, there is also a rapidly growing volume of thermoplastic post-consumer waste. In addition to the packaging sector, the agricultural sector is responsible for a global share of around 2%, i.e. more than 7 million tonnes of plastic consumption per year. Modern agriculture is hardly conceivable today without thermoplastic materials. Transparent films made of low-density polyethylene (LDPE), for example, are used in tunnel covers, greenhouses or for mulching and are indispensable for increasing agricultural production and efficiency in irrigation and pest management. After use (>1 year), these mulch films must be recovered and disposed of. In addition to contamination with earth and sand, weathering (UV radiation) in particular places narrow limits on the recyclability of such waste. For a successful recycling business model, the recyclate competes with the primary plastic ("virgin" granulate) on price, while at the same time the quality of the films made from recycled material must not be significantly worse. This leads to enormous amounts of waste being incinerated or dumped. In order to counter landfill and a further worsening of the plastic waste problem, a higher quality benefit is required for weathered thermoplastic films.

It is an object of the invention to provide an economically and ecologically advantageous option for a reuse of weathered thermoplastic films.

To solve this problem, the present invention provides, in a first aspect, a fiber-reinforced composite material comprising reinforcing fibers embedded in a thermoplastic matrix, wherein the composite material comprises a bonding agent for bonding the reinforcing fibers to the thermoplastic matrix, the bonding agent being or comprising a photodegraded polyolefin.

The term "composite material" or "compound" is understood to refer to a material comprised of two or more materials combined by using a bonding method or a form-fitting method or a combination of the two. The composite material has other, usually better material performance than its individual components.

The terms "fiber-reinforced composite material" or "fiber-reinforced composite", abbreviated FRC, as used herein refer to a composite material where short (discontinuous) or continuous fibers, or mats or fabrics thereof, of a suitable material are embedded into a plastic (organic polymer) matrix. The terms are synonymously used to the terms "polymer matrix composite" or "polymeric composite", abbreviated "PMC". The fiber reinforcement increases strength and/or stiffness of the composite material compared to the cured matrix material alone. The fibers can be arranged and oriented in different forms and directions within the matrix to provide different physical properties. Reinforcing fibers maybe synthetic fibers, for example, fiberglass, carbon fibers, graphite fibers, carbon nanotubes, aramid fibers, or natural fibers like lignocellulosic fibers, i.e. fibers of a lignocellulose-containing material. Composite materials reinforced with natural fibers are also termed "natural fiber reinforced composite" or "natural fiber-reinforced polymer composites", abbreviated NFRC or NFC. Natural fiber reinforced composites in which wood or wood components are the source of the lignocellulose-containing fiber material are also called wood-plastic composites (WPC). Suitable matrix materials are thermosetting materials, for example thermoset resins like epoxy, polyurethanes, phenolic resins, amino resins, or polyamides, or thermoplastic materials like polyolefins. The above terms do not exclude that the fiber-reinforced composite material includes, in addition to the basic components, i.e. the fiber component and the polymer matrix component, further ingredients, for example, additives like compatibilizers, fillers or the like. The terms "basic fiber-reinforced composite material" or "basic composite material" refer to a material composed of the two main components of a fiber-reinforced composite material, namely a plastic matrix material and reinforcing fibers embedded in the plastic matrix.

A "lignocellulose-plastic composite material" is understood here to refer to a composite material comprised of one or more plastics, in particular a thermoplastic, and a lignocellulose-containing material.

The terms "lignocellulose-containing material or "lignocellulose material" refer to a material consisting predominantly of cellulose, hemicellulose and (optionally) lignin in different amounts. The term does not only include a material consisting predominantly or completely of lignocellulose, i.e. cellulose, hemicellulose and lignin. Instead the term also includes lignin-free hemicellulose/cellulose fibers if the lignin has been partially or completely removed by a corresponding chemical digestion process (CTMP, cellulose or hemicellulose). This term also includes materials that contain other ingredients in addition to lignocellulose, hemicellulose and/or cellulose.

The term "thermoplastic matrix" is used herein for a thermoplastic material in which a synthetic or natural fiber is embedded.

The term "thermoplastic material" as used here is understood to refer to a thermoplastic polymer or a mixture of thermoplastic polymers. Thermoplastics are plastics that can be shaped reversibly in a certain temperature range (thermoplastic). Examples of thermoplastics include polyethylene (PE), polypropylene (PP), acrylonitrile-butadiene-styrene (ABS), polyamide (PA), polylactate (PLA), polymethyl methacrylate (PMMA), polycarbonate (PC), polyethyleneterephthalate (PET), polystyrene (PS), polyether ether ketone (PEEK), thermoplastic starch (TPS) or polyvinyl chloride (PVC).

The term "polyolefin" (IUPAC: "poly(alkene)") refers to an elastomeric or thermoplastic material being composed of polymers formed by polymerization of olefin (alkene, cycloalkene, polyene) monomer units. Examples of thermoplastic polyolefins are polyethylene (PE), for example low-density polyethylene (LDPE), linear low-density polyethylene (LLDPE), very-low-density polyethylene (VLDPE), ultra-low-density polyethylene (ULDPE) or medium-density polyethylene (MDPE), polypropylene (PP), polyisobutylene (PIB), polymethylpentene (PMP) or polybutene-1 (PB-1).

The terms "bonding agent", "coupling agent" or "compatibilizer" in relation to a fiber-reinforced composite material are used for substances or compositions serving to improve the interfacial bonding between the reinforcing fibers and the plastic matrix, or, in other words, to make reinforcing fibers (more) compatible with the matrix into which they are embedded. For example, a bonding agent may serve to change the polarity of reinforcing natural fibers in order to allow a more intimate contact (coupling) of the fibers with a non-polar matrix material.

The terms "photodegraded polyolefin material" or "UV-degraded polyolefin material" refer to a polyolefin material, for example a low-density polyethylene (LDPE), that has been exposed to UV light over a period of time and/or at an intensity causing changes of the physical and/or chemical properties of the material in comparison to the material in its original state, i.e. after its production, wherein the changes are specifically caused by irradiation of ultraviolet (UV) light, in particular UV light in the spectrum of sunlight. "Exposed to UV light" includes exposure to a spectrum of electromagnetic waves comprising UV radiation, e.g. exposure to sun light. UV light or UV radiation is a form of electromagnetic radiation with a wavelength of 100 nm to 400 nm. An example of a UV degraded polyolefin material is an LDPE foil that has been exposed over at least several months, preferably 2-5 years, for example 3 to 4 years, to sunlight. Such a foil shows characteristic changes, for example, increased brittleness. The term does not exclude that a material is also partly thermodegraded, i.e., exhibits physical and/or chemical property changes caused by heat. UV degradation can, for example, be determined by the "carbonyl index method" using infrared spectroscopy, in particular Fourier-transform infrared (FTIR) spectroscopy. The "carbonyl index" can be calculated as the ratio of the integral of the infrared absorption band of the carbonyl peak (1650 - 1800 cm⁻¹) and the integral of the stretching vibration of the C-H peak (1420 - 1480 cm⁻¹) (see, for example, Hsu, Yu-Chieh., Weir, Michael P., Truss, Rowan W., Garvey, Christopher J., Nicholson, Timothy M., Halley, Peter J. (2012): A fundamental study on photo-oxidative degradation of linear low density polyethylene films at embrittlement, In Polymer 53 (12), pp. 2385-2393. DOI: 10.1016/j.polymer.2012.03.044). Other methods to determine UV degradation of polymers include the change in melt flow index (MFI, ISO 1133, ASTM D1238) and reduction of elongation and strength (EN ISO 527). UV degradation of polyolefins involves photocatalyzed oxidation of the polymer material leading to the formation of non-volatile carbonyl oxidation products, e.g. carboxylic acids. In contrast to thermodegraded polyolefins, ketones formed photochemically react by Norrish type I or type II reactions, reactions that cannot occur in thermooxidation (see, for example, Gardette, M., Perthue, A., Gardette, JL., Janecska, T., Foldes, E., Pukánszky, B., Therias, S. (2013), Photo- and thermal-oxidation of polyethylene: Comparison of mechanisms and influence of unsaturation content, In Polymer Degradation and Stability 98 (11), pp. 2383-2390. DOI: 10.1016/j.polymdegradstab.2013.07.017). Consequently, photodegraded polyolefins differ from thermodegraded polyolefins in the concentration of the oxidation products. While thermooxidized polyolefins have a typical ketone peak at 1718 cm⁻¹ in an FTIR spectrum, ketones in photooxidized polyolefins are subject to photolysis involving Norrish type I or type II reactions such that the peak shifts to 1713 cm⁻¹. Together with the shift of the peak to 1713 cm⁻¹, the formation of unsaturated vinyl and vinylene groups can be observed, which is typical for photooxidized polyolefins. A photodegraded (UV-degraded) polyolefin material is therefore in particular a material showing, in an FTIR spectrum a broad absorption band in the carbonyl area (1650-1850 cm⁻¹) compared to the original material or to a specimen representative for or comparable with the type of material investigated, e.g., a typical non-degraded LDPE specimen. Other absorption bands appear in the vinyl area (900 cm⁻¹ - 999 cm⁻¹ and 1640 cm⁻¹).

The term "pellet" in relation to a fiber-reinforced composite material refers to a small, preferably regularly shaped, rounded, spherical or cylindrical particle composed of the fiber-reinforced composite material.

It has surprisingly been found that UV degraded polyolefin can advantageously be used as bonding agent in composite materials. Bonding agents previously used can thus be replaced with a bonding agent derived from a waste material. In the production of wood-plastic composites (WPC), for example, maleic anhydride grafted polyethylene (MAPE) or maleic anhydride grafted polypropylene (MAPP) are currently predominantly used as bonding agents (see, for example, Rao J, Zhou Y, Fan M., 2018, Revealing the Interface Structure and Bonding Mechanism of Coupling Agent Treated WPC, Polymers (Basel) 10(3):266, doi:10.3390/polym10030266; Schirp A. & Schirp C., 2021, Online Pre-Treatment of Thermomechanical Pulp with Emulsified Maleated Polypropylene for Processing of Extruded Thermoplastic Composites, Fibers 9(3), 17, doi:/10.3390/fib9030017). The effectiveness of these compounds is based on their properties to be both polar and non-polar, polar due to the maleic anhydride and non-polar due to the grafted polyolefins. The grafted polyolefins combine with their equivalent, i.e. the matrix, while the maleic anhydride forms a covalent bond with the hydroxyl groups of the lignocellulose. These bonding agents are used in various compositions and in combination with other additives with a proportion of approx. 2 to 4% on an industrial scale. These agents, however, are expensive compared to the matrix material. In addition, petrochemical primary raw materials are used for the production of these compounds, making them ecologically unfavorable. Compounds prepared with UV degraded polyolefin have properties in terms of tensile strength, flexural strength and impact strength comparable to compounds prepared with MAPE as bonding agent, for example. UV degraded olefins are highly efficient as compatibilizers and provide cost savings compared to the production of composites with conventional petrochemical materials. Furthermore, the invention enables the recycling of a waste material, for example, PE foils extensively used in agriculture, that would otherwise be deposited or incinerated.

For the preparation of a fiber-reinforced composite material according to the invention, a photodegraded polyolefin material, for example derived from a photodegraded polyolefin foil like a mulch foil used for several years (for example 1 to 4 years) in agriculture, is added as a bonding agent. The photodegraded foils are preferably pretreated, e.g. cleaned and reduced to small pieces, before they are used in the production of a fiber-reinforced composite material of the invention. Particles of the pretreated UV degraded polyolefin material are added to a melt of the thermoplastic matrix material, e.g., a non-photodegraded polyolefin material, and reinforcing fibers, for example fibers of lignocellulosic material. Further additives, such as lubricants, etc., may also be added to the melt. Any compounding order can be chosen, and there is also no restriction regarding the methods for thermoplastic processing that can be used, e.g., extrusion, hot cool mixing, injection moulding and compression moulding.

The UV degraded polyolefin may be, for example, UV degraded polyethylene (PE), for example UV degraded low-density polyethylene (LDPE), UV degraded linear low-density polyethylene (LLDPE), UV degraded very-low-density polyethylene (VLDPE), UV degraded ultra-low-density polyethylene (ULDPE) or UV degraded medium-density polyethylene (MDPE), UV degraded polypropylene (PP), UV degraded polyisobutylene (PIB), UV degraded polymethylpentene (PMP) or a UV degraded polybutene (polybutylene, polybutene-1, PB, PB-1), or a mixture thereof.

In a preferred embodiment of the fiber-reinforced composite material according the invention, the UV degraded polyolefin is UV degraded polyethylene, preferably UV degraded low-density polyethylene, LDPE. LDPE foils are extensively used, for example, as mulch foils in agriculture, and are a particular useful source of a UV degraded polyolefin useful in the invention.

Particular preferred, in the fiber-reinforced composite material according the invention, the reinforcing fibers are natural fibers, preferably lignocellulosic fibers, and the composite material is a natural fiber reinforced composite, NFRC, preferably a lignocellulose-plastic composite, LPC, or a wood-plastic composite, WPC.

The thermoplastic matrix of the fiber-reinforced composite material of the invention can be composed of any suitable thermoplastic material, for example polyethylene (PE), polypropylene (PP), acrylonitrile-butadiene-styrene (ABS), polyamide (PA), polylactate (PLA), polymethyl methacrylate (PMMA), polycarbonate (PC), polyethyleneterephthalate (PET), polystyrene (PS), polyether ether ketone (PEEK), thermoplastic starch (TPS) or polyvinyl chloride (PVC), or a mixture thereof. The thermoplastic material is preferably a non-photodegraded, particularly preferred a virgin (non-degraded) thermoplastic. In a particular preferred embodiment of the invention the thermoplastic matrix is composed of a non-photodegraded polyolefin, further preferred a virgin, i.e. non-degraded, polyolefin. The thermoplastic matrix can be of the same type of thermoplastic as the bonding agent, for example of a polyethylene polymer. However, the thermoplastic material of the bonding agent differs from the thermoplastic matrix material in that the thermoplastic material of the bonding agent has undergone photodegradation whereas the thermoplastic matrix has not. The thermoplastic material of the matrix and the thermoplastic material of the bonding agent may, however, also be different thermoplastic materials. As an example, the thermoplastic material of the bonding agent can be UV degraded LDPE and the thermoplastic material of the matrix polypropylene.

In a preferred embodiment of the invention, the bonding agent is present in the composite material in a proportion of 0.1 to 30 % by weight, preferably 0.1 to 25 %, 0.15 to 20 %, 0.2 to 15 %, or 0.2 to 10 % by weight, further preferred 0.5 to 10 %, 0.5 to 8 %, 0.5 to 6 %, 0.5 % to 4 %, or 1 to 4 % by weight of the composite material. An example of a particularly preferred proportion is 3% by weight of the composite material. The term "by weight of the composite material" means that the weight relates to the weight of a basic composite material composed of a fiber component, e.g., lignocellulosic fibers, and a plastic (polymer) matrix in which the fiber component is embedded. As an example, in case of 100 kg of a composite material composed of 50 kg fiber component, e.g., lignocellulosic fibers, and 50 kg plastic matrix component, a presence of 3% of the bonding agent by weight of the composite material would mean to add 3%, i.e., 3 kg, of bonding agent to 100 kg of the composite material.

In a particular preferred embodiment of the invention, the composite material according to the invention is in the form of pellets or a powder.

In a further aspect the invention relates to a method of producing a fiber-reinforced composite material according to the invention described above, the method comprising the step of producing a melt comprising a thermoplastic matrix, reinforcing fibers, and a photodegraded polyolefin as bonding agent. The method may, for example, involve the melting of pellets of the fiber-reinforced composite material of the first aspect of the invention. The production of a fiber-reinforced composite material is generally known to the skilled person (see, for example, WO 2017/045676 A1), and any suitable known method adapted to include a photodegraded polyolefin as bonding agent can be applied. Further processing methods that may be used include extrusion, injection moulding, compression moulding, and hot cool mixing.

In a preferred embodiment of the method of the invention the photodegraded polyolefin is combined with the thermoplastic matrix and the reinforcing fibers in a proportion of 0.1 to 30 % by weight, preferably 0.1 to 25 %, 0.15 to 20 %, 0.2 to 15 %, or 0.2 to 10 % by weight, further preferred 0.5 to 10 %, 0.5 to 8 %, 0.5 to 6 %, 0.5 % to 4 %, or 1 to 4 % by weight of the composite material. As an example, in a preferred embodiment of the method of the invention the photodegraded polyolefin may be combined with the thermoplastic matrix and the reinforcing fibers in a proportion of 3% by weight of the composite material. As mentioned above, combining the thermoplastic matrix and the reinforcing fibers in a proportion of, for example, 3% would mean that, in case of 100 kg of a basic composite material composed of, e.g., 50 kg fiber component, e.g., lignocellulosic fibers, and 50 kg plastic matrix component, e.g., virgin LDPE, 3 kg of the bonding agent would be added to the 100 kg of basic composite material.

In a third aspect, the invention also relates to the use of a photodegraded polyolefin material as a bonding agent in a fibre-reinforced composite material.

In a fourth aspect the invention relates to an article of manufacture comprising a fiber-reinforced composite material according to first aspect of the invention. Examples of an article of manufacture according to the invention are sheets or preformed vehicle interior parts like dashboards, door panels and the like. Further examples of an article of manufacture according to the invention include floor decking, fencing poles, wood like planks for exterior use, 3D printing filaments etc.

The invention is explained in greater detail below on the basis of the accompanying figures and exemplary embodiments merely for illustrations purposes.

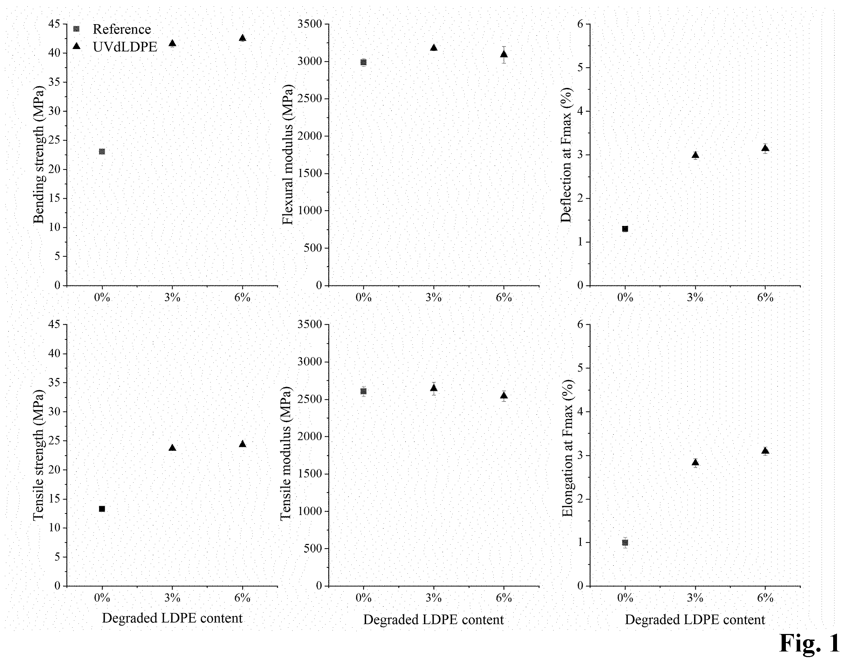

Figure 1. Mechanical properties of two embodiments of a fiber reinforced composite material of the invention, compared to a reference composite material produced with 60% wood and 40% virgin LDPE.

Figure 1 shows the flexural and tensile properties of a fiber reinforced composite material produced with and without UV degraded low-density polyethylene. The basic reference composite material was produced with 60% wood fibers and 40% low-density polyethylene. Two embodiments of a composite material according to the invention were prepared in that 3% or 6% UV degraded LDPE (UVdLDPE) by weight, based on the overall weight of the basic composite material, were added. Mechanical properties of the two embodiments of a fiber reinforced composite material of the invention were determined and compared to the mechanical properties of the reference composite material.

The flexural strength of the reference fiber reinforced composite material was 23 Mpa. When 3% and 6% UVdLDPE were added, the flexural strength was 40.74 and 41 Mpa, respectively. The tensile strength of the reference material was 13.26 Mpa. When 3% and 6% UVdLDPE were added, the tensile strength was 23.26 and 23.25 Mpa, respectively. The flexural modulus of the reference fiber reinforced composite material was 2987 Mpa. When 3% and 6% UVdLDPE were added, the flexural modulus was 3172 and 3088 Mpa, respectively. The tensile modulus of the reference was 2605.57 Mpa. When 3% and 6% UVdLDPE were added, the tensile modulus was 2643.54 and 2546 Mpa, respectively. The flexural modulus of the reference fiber reinforced composite material was 2987 Mpa. When 3% and 6% UVdLDPE were added, the flexural modulus was 3172 and 3088 Mpa, respectively. The tensile modulus of the reference was 2605.57 Mpa. When 3% and 6% UVdLDPE were added, the tensile modulus was 2643.54 and 2546 Mpa, respectively. The deflection at maximum force of the reference fiber reinforced composite material was 1.3%. When 3% and 6% UVdLDPE were added, the flexural modulus was 2.98 and 3.14%, respectively. The elongation at maximum force of the reference was 0.94%. When 3% and 6% UVdLDPE were added, the elongation at maximum force was 2.83 and 3.1%, respectively.

## Claims

1. A fiber-reinforced composite material comprising reinforcing fibers embedded in a thermoplastic matrix, wherein the composite material comprises a bonding agent for bonding the reinforcing fibers to the thermoplastic matrix, the bonding agent being or comprising a photodegraded polyolefin.

2. The fiber-reinforced composite material according to claim 1, wherein the photodegraded polyolefin is made from photodegraded polyolefin foils.

3. The fiber-reinforced composite material according to one of claims 1 or 2, wherein the photodegraded polyolefin is selected from photodegraded polyethylene (PE), photodegraded polypropylene (PP), photodegraded polyisobutylene (PIB), photodegraded polymethylpentene (PMP) or photodegraded polybutene-1 (PB-1), or a mixture thereof, preferably selected from photodegraded low-density polyethylene (LDPE), photodegraded linear low-density polyethylene (LLDPE), photodegraded very-low-density polyethylene (VLDPE), photodegraded ultra-low-density polyethylene (ULDPE) or medium-density polyethylene (MDPE), particularly preferred is photodegraded low-density polyethylene, LDPE.

4. The fiber-reinforced composite material according to one of the preceding claims, wherein the reinforcing fibers are natural fibers, preferably lignocellulosic fibers, and the composite material is a natural fiber reinforced composite, NFRC, preferably a lignocellulose-plastic composite, LPC, or a wood-plastic composite, WPC.

5. The fiber-reinforced composite material according to one of the preceding claims, wherein the thermoplastic matrix is composed of a non-degraded polyolefin.

6. The fiber-reinforced composite material according to one of the preceding claims, wherein the thermoplastic matrix is composed of polyethylene (PE), polypropylene (PP), acrylonitrile-butadiene-styrene (ABS), polyamide (PA), polylactate (PLA), polymethyl methacrylate (PMMA), polycarbonate (PC), polyethyleneterephthalate (PET), polystyrene (PS), polyether ether ketone (PEEK), thermoplastic starch (TPS) or polyvinyl chloride (PVC), or a mixture thereof.

7. The fiber-reinforced composite material according to one of the preceding claims, wherein the bonding agent is present in the composite material in a proportion of 0.1 to 30 % by weight, preferably 0.1 to 25 %, 0.15 to 20 %, 0.2 to 15 %, or 0.2 to 10 % by weight, further preferred 0.5 to 10 %, 0.5 to 8 %, 0.5 to 6 %, 0.5 % to 4 % or 1 % to 4 % by weight of the composite material.

8. A method of producing a fiber-reinforced composite material according to one of claims 1 to 7, comprising the step of producing a melt comprising a thermoplastic matrix, reinforcing fibers, and a photodegraded polyolefin as bonding agent.

9. The method according to claim 8, wherein the photodegraded polyolefin is combined with the thermoplastic matrix and the reinforcing fibers in a proportion of 0.1 to 30 % by weight, preferably 0.1 to 25 %, 0.15 to 20 %, 0.2 to 15 %, or 0.2 to 10 % by weight, further preferred 0.5 to 10 %, 0.5 to 8 %, 0.5 to 6 %, 0.5 % to 4 % or 1 to 4 % by weight of the composite material.

10. Use of a photodegraded polyolefin as a bonding agent in a fibre-reinforced composite material.

11. An article of manufacture comprising a fiber-reinforced composite material according to one of claims 1 to 7.
